# Europäisches Patentamt
## European Patent Office
## Office européen des brevets

(11) Publication number: **0 057 393**
**B1**

(12) **EUROPEAN PATENT SPECIFICATION**

(45) Date of publication of patent specification: **02.05.85**

(21) Application number: **82100452.0**

(22) Date of filing: **22.01.82**

(51) Int. Cl.⁴: **G 01 N 27/56, G 01 N 27/00**

(54) **Probe for measuring partial pressure of oxygen.**

(30) Priority: **29.01.81 JP 10217/81 U**

(43) Date of publication of application:
**11.08.82 Bulletin 82/32**

(45) Publication of the grant of the patent:
**02.05.85 Bulletin 85/18**

(84) Designated Contracting States:
**DE FR GB**

(56) References cited:
**FR-A-2 284 880**
**GB-A-2 033 085**
**GB-A-2 050 628**
**US-A-3 975 253**
**US-A-4 264 425**

(73) Proprietor: **NISSAN MOTOR COMPANY, LIMITED**
**No.2, Takara-cho, Kanagawa-ku**
**Yokohama-shi Kanagawa-ken 221 (JP)**

(72) Inventor: **Touda, Masayuki**
**c/o Oppama Plant of Nissan Motor Co., Ltd., No. 1**
**Natsushima-cho Yokosuka City (JP)**
Inventor: **Kimura, Shinji**
**c/o Oppama Plant of Nissan Motor Co., Ltd., No. 1**
**Natsushima-cho Yokosuka City (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Courier Press, Leamington Spa, England.

## Description

This invention relates to a probe for measuring partial pressures of oxygen in a gas atmosphere, comprising a tubular case having an open end, a closure means for gastightly closing the other end of said tubular case, an oxygen sensing element disposed in said tubular case so as to be entirely spaced from said closure means and the inner surface of said case, said oxygen sensing element comprising an electric heating means and an oxygen concentration cell which utilizes an oxygen ion conductive solid electrolyte and takes the form of a laminate of thin layers formed on a substrate, and a plurality of lead wires which extend from said oxygen sensing element and pass through said closure means.

In various industries concerned with reduced pressures or vacuum, it is important to accurately detect the concentration or partial pressure of either a residual gas in a vacuum chamber or a gas purposefully introduced into the vacuum chamber. Particularly in the current semiconductor industry, it is a matter of primary importance to strictly control the low pressure gas atmosphere or vacuum in the apparatus for growing thin films by a physical vapor deposition technique in order to realize the intended characteristics of the thin films and devices including the thin films and also to minimize the number of defective products.

Various kinds of vacuum gages are known, but unfortunately each of the conventional vacuum gages is useful only for pressures over a limited range. In the thin film technology, therefore, it is usual to use a combination of a Geissler tube, which is for detecting low magnitudes of vacuum or pressures above $1.33 \times 10^{-2}$ Pa from the color of a luminous glow produced by electrifying a sample gas, and an ionization gage which is for measuring higher magnitudes of vacuum or pressures ranging from $1.33 \times 10^{-1}$ Pa to $1.33 \times 10^{-6}$ Pa by ionizing a sample gas and measuring the ion current. However, this method is rather inconvenient in various respects. As to the Geissler tube, it has no ability of quantitatively measuring pressures and requires the application of a very high voltage which raises the need for a protecting means. Furthermore, this gage cannot be used for a long period of time because of a sputtering phenomenon attributed to the electric discharge and the heating of the electrodes. The ionization gage is a large-scaled and expensive instrument, but at relatively high pressures the filament of this gage is liable to break by the influence of the thermoelectronic emission. When used in a gas atmosphere containing oxygen, the filament is liable to break even at considerably low pressures. Besides, this gage must be calibrated for each gas to be measured because different gases have different ionizing properties, and this raises a serious problem about the accuracy of measurement in the case of using the gage in a vacuum chamber into which a mixed gas is introduced in performing deposition of thin films.

Recently there has been an increasing trend to use thin films of various oxides in developing new types of semiconductor devices and electrochemical devices. In the production of thin films of oxides by deposition from vapor phase, it is a matter of great importance to precisely control the concentration or partial pressure of oxygen in the vacuum chamber for the deposition since the characteristics of the deposited thin films depend greatly on the oxygen partial pressure.

It is conceivable to measure low pressures of an oxygen-containing gas atmosphere by using an oxygen sensor which includes an oxygen ion conductive solid electrolyte such as zirconia stabilized with calcia or yttria and operates on the principle of an oxygen concentration cell. Oxygen sensors of this type have been developed mostly for use in combustion gases such as exhaust gases of automotive engines. Fortunately, it is a recent trend to construct the oxygen sensing element of such an oxygen sensor in the form of a laminate of thin, film-like layers on a very small-sized substrate with the benefit of a greatly enhanced sensitivity.

A probe for measuring partial pressure as indicated at the beginning of this description is known for example from GB—A—2033085 or US—A—4,224,113. It is a usual practise to construct a practical oxygen sensing probe by first mounting the small-sized oxygen sensing element on an end face of a ceramic rod which is formed with axial holes through which lead wires of the oxygen sensing element are extended. The solid electrolyte oxygen concentration cell formed in the oxygen sensing element can properly function only at considerably high temperatures, for example at temperatures above about 400°C. Accordingly the oxygen sensing element includes an electric heater usually embedded in the substrate. When the oxygen sensing probe is used as a vacuum gage, it is inevitable that the heating of the oxygen sensing element is accompanied by heating of the aforementioned ceramic rod by conduction of heat from the sensing element to the ceramic rod to result in liberation of certain gaseous substances from the heated rod. Therefore, it is difficult to accurately measure very low partial pressures of oxygen by using the conventional oxygen sensing probe.

It is the task of the present invention to improve a probe for measuring partial pressures of oxygen in a gas atmosphere according to the generic portion of claim 1 such that the probe is useful over a wide range of oxygen partial pressures extending from a nearly atmospheric pressure to a very low pressure that can be taken as a high level of vacuum and is high in accuracy of measurement, simple in construction and excellent in durability.

This task is solved by the features comprised by the characterising portion of claim 1.

The essential feature of the invention resides in that the oxygen sensing element, which is a known one, is mechanically supported solely by the lead wires so as to be completely spaced from both the closure means and the inner surface of the tubular case. That is, no heat-absorbing member except the lead wires is in contact with the oxygen sensing element. Therefore, heating of the oxygen sensing element can be accomplished by the supply of a small amount of calorific power to the heating means, and measurement of very low pressures can be made with high accuracy without suffering from liberation of gaseous substances from a heated component of the probe.

This probe is useful over a very wide range of partial pressures of oxygen, such as from $10^4$ Pa to $10^{-4}$ Pa, and accordingly can be used as a vacuum gage in apparatus for physical vapor deposition using an oxygen-containing gas. As additional advantages, this probe is very simple in construction and accordingly can be produced at a very low cost, and has a very long service life with no possibility of breaking of electrodes.

In a pressure measuring instrument utilizing this probe, the lead wires of the probe are connected to a measuring unit, which includes power supply circuits to supply a controlled heating current and another controlled current for establishment of a reference oxygen partial pressure to the oxygen sensing element and a voltage measuring circuit to measure an electromotive force generated by the oxygen sensing element.

Preferred embodiments of the invention are indicated in the subclaims.

Embodiments for carrying out the invention are described in detail below with reference to drawings illustrating said embodiments, in which:

Fig. 1 is a longitudinal sectional view of a probe for measuring partial pressure of oxygen in a gas atmosphere as an embodiment of the invention;

Fig. 2 is a schematic and sectional view of an oxygen sensing element useful in the probe of Fig. 1;

Figs. 3 and 4 are schematic and sectional views of two differently constructed oxygen sensing elements, respectively, as alternatives to the element of Fig. 2;

Fig. 5 shows the probe of Fig. 1 in a state attached to a wall of a vacuum chamber;

Fig. 6 is a graph showing the relationship between a temperature at which an oxygen sensing element in a probe according to the invention should be maintained by the action of a heater provided to the sensing element and the amount of heat to be generated by the heater to realize the desired temperature, in comparison with the same matter in a conventional oxygen sensing probe;

Fig. 7 is a longitudinal sectional view of a probe for the same purpose as that of Fig. 1 as another embodiment of the invention; and

Figs. 8 and 9 show two kinds of minor modifications of the probe of Fig. 1, respectively.

Description of the Preferred Embodiments

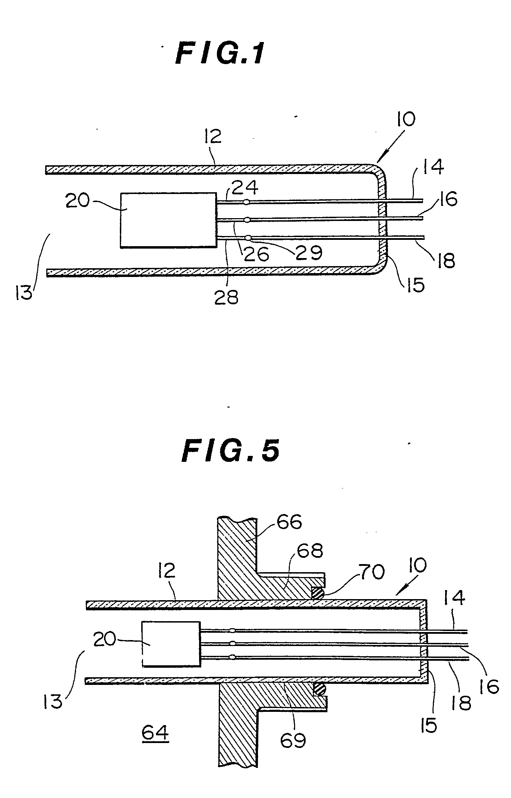

Fig. 1 shows a probe 10 according to the invention for measuring an oxygen partial pressure in a gas atmosphere of which pressure may be either close to or lower than the atmospheric pressure. Fundamentally, this probe 10 consists of a tubular case 12, an oxygen sensing element 20 disposed in the case 12 and a plurality of lead wires 14, 16, 18 which connect the oxygen sensing element 20 to a separately located measurement unit (not shown) and, besides, serve as mechanical supports for the oxygen sensing element 20. The tubular case 12 is open at its one end 13 but is closed at the opposite end 15. The lead wires 14, 16, 18 extend through the end wall 15 of the case 12 so as to keep the oxygen sensing element 20 entirely spaced from the inner surfaces of the case 12, and these lead wires 14, 16, 18 are gastightly fixed to the end wall 15. The tubular case 12 serves for protecting the oxygen sensing element 20 not only against damages during handling but also against deposition of an evaporated material during use of the probe 10 in the vacuum chamber of a physical vapor deposition apparatus for instance.

There is no particular limitation to the material of the tubular case 12 insofar as the side and end walls of the case 12 can be made gastight, but it is desirable to select a material that does not liberate gaseous substances even at considerably low pressures and is low in the tendency of adsorbing gaseous or ionized substances. From a practical point of view, it is quite suitable and economical to employ a glass as the material of the case 12. When the case 12 is made of a glass, the lead wires 14, 16, 18 are electrically insulated from the case 12 without any trouble and can be hermetically fixed to the case 12 simply by local fusion of the end wall 15. When the case 12 is made of a metal, there is the need of using an insulating seal means, such as glass-filled plugs, for extending the lead wires 14, 16, 18 through the end wall 15.

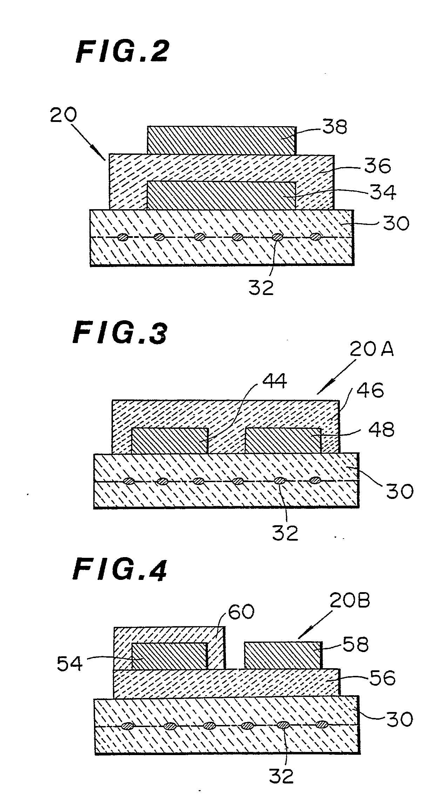

Fig. 2 shows an example of the construction of the oxygen sensing element 20. This element 20 is of the oxygen concentration cell type using an oxygen ion conductive solid electrolyte as its principal material.

A structurally basic part of this element 20 is a substrate 30 made of a ceramic material such as alumina. A first electrode layer 34 usually called reference electrode layer is formed on a major surface of the substrate 30, and a layer 36 of an oxygen ion conductive solid electrolyte such as zirconia stabilized with a small amount of yttria or calcia is formed on the same side of the substrate 30 so as to closely and substantially entirely cover the electrode layer 34. A second electrode layer 38 usually called measurement electrode layer is formed on the outer surface of the solid electrolyte layer 36. Platinum is a typical example of suitable materials for the two electrode layers 34 and 38. Each of these three layers 34, 36, 38 is a thin, film-like layer and has a microscopically porous and gas-permeable structure. Each of these three layers 34, 36, 38 is formed, for example, by applying a paste containing a powered electrode material or solid electrolyte material onto the surface of the substrate 30 or the underlying layer and sintering the powdered material contained in the applied paste. For example, the thickness of the solid electrolyte layer 36 is about 50 μm or smaller, and each of the two electrode layers 34 and 38 is as thin as about 5 μm. The substrate 30 may be about 7 mm × 10 mm in width and about 1—2 mm in thickness by way of example. An electric heater element 32 is embedded in the substrate 30. In practice, the substrate 30 may be prepared by face-to-face bonding of two alumina sheets one of which is precedingly provided with the heater element 32 in the form of, for example, a thin platinum layer formed by printing of a platinum paste and sintering of the platinum powder contained in the printed paste.

As is known, the solid electrolyte layer 36 and the two electrode layers 34 and 38 constitute an oxygen concentration cell that generates an electromotive force when there is a difference in oxygen partial pressure between the first electrode side and the second electrode side of the solid electrolyte layer 36. To sense the concentration or partial pressure of oxygen in a gas atmosphere to which the second electrode layer 38 is exposed, there is the need for establishing a reference oxygen partial pressure at the interface between the solid electrolyte 36 and the first electrode layer 34. According to U.S. Patent No. 4,224,113, this oxygen sensing element 20 is so designed as to establish a reference oxygen partial pressure at the aforementioned interface by externally supplying a DC current of an adequate intensity to the concentration cell part of the element 20 so as to flow through the solid electrolyte layer 36 between the two electrode layers 34 and 38. An oxygen partial pressure of a suitable magnitude can be maintained at the aforementioned interface, while the second electrode layer 38 is exposed to a gas atmosphere subject to measurement, as a joint effect of migration of oxygen ions through the solid electrolyte layer 36 caused by the flow of the aforementioned DC current and diffusion of oxygen molecules through the micropores in the solid electrolyte layer 36. This element 20 is provided with the heater 32 because the solid electrolyte oxygen concentration cell formed in this element 20 operates properly and efficiently only at temperatures above a fairly high level such as about 400°C.

As shown in Fig. 1, the oxygen sensing element 20 is provided with three lead wires 24, 26, 28, which are usually platinum wires each about 0.2—0.5 mm in diameter, in order to supply the aforementioned DC current to the concentration cell part and to take out an electromotive force generated by the concentration cell, and also to supply a heating current to the heater 32. One (24) of these lead wires is connected to one terminal of the heater 32, and another lead wire 26 is connected to the first electrode layer 34. The third lead wire 28 is connected to the other terminal of the heater 32 and also to the second electrode layer 38, so that this lead wire 28 serves as a grounding lead common to the heater 32 and the concentration cell in this element 20. As indicated at 29 in Fig. 1, these three lead wires 24, 26, 28 are relatively short in length and welded or soldered to the precedingly explained three lead wires 14, 16, 18, respectively. A preferable material of the lead wires 14, 16, 18 is a copper wire in the form of solid rod, which may be about 0.5 mm in diameter for example, but it is optional to employ any other metal that is sufficiently high in electronical conductivity. Also it is optional to use a pin (not shown) high in rigidity as an intermediate portion of each of these lead wires 14, 16, 18 so as to fix each lead wire 14, 16, 18 to the case 12 by inserting the pin in the end wall 15.

Fig. 3 shows an oxygen sensing element 20A which operates on the same principle as the element 20 of Fig. 2 but is constructed differently. The substrate 30 and the heater 32 of this oxygen sensing element 20A are identical with the counterparts in the element 20 of Fig. 2. A first electrode layer 44 is formed on the surface of the substrate 30 so as to occupy only a limited area of the substrate surface, and a second electrode layer 48 is formed on the same surface of the substrate 30 so as to be spaced from the first electrode layer 44. An oxygen ion conductive solid electrolyte layer 46 is formed on the same side of the substrate 30 so as to cover both the first and second electrode layers 44 and 48 and make direct contact with the substrate 30 in areas between and around the two electrode layers 44 and 48. Each of these three layers 44, 46, 48 is a thin, film-like layer having a microscopically porous and gas-permeable structure. In this oxygen sensing element 20A, a reference oxygen partial pressure is established at the interface between the first electrode 44 and the solid electrolyte 46 by forcing a DC current to flow between the first and second electrodes 44 and 48 through the solid electrolyte 46.

Fig. 4 shows another oxygen sensing element 20B which is similar in principle to the elements 20, 20A of Figs. 2 and 3 but is still different in construction. The substrate 30 and the heater 32 in this element 20B are identical with the counterparts in Figs. 2 and 3. An oxygen ion conductive solid electrolyte layer 56 is formed on a major surface of the substrate 30, and first and second electrode layers 54 and 58 are formed on the outer surface of the solid electrolyte layer 56 so as to be spaced from each other. Each of these three layers 54, 56, 58 is a microscopically porous and permeable to gases. In addition, there is a shield coating layer 60, which is formed of a ceramic material and has a practically gas-impermeable structure, on the solid electrolyte layer 56 so as to entirely cover the first electrode layer 54, leaving the second electrode layer 58 exposed. To establish a reference oxygen partial pressure at the interface between the first electrode layer 54 and the solid electrolyte layer 56, a DC current is forced to flow between the first and second electrodes 54 and 58 through the solid electrolyte 56.

Either the oxygen sensing element 20A of Fig. 3 or the element 20B of Fig. 4 can be used in the probe 10 of Fig. 1, or in any other embodiment of the invention, as an alternative to the element 20 of Fig. 2.

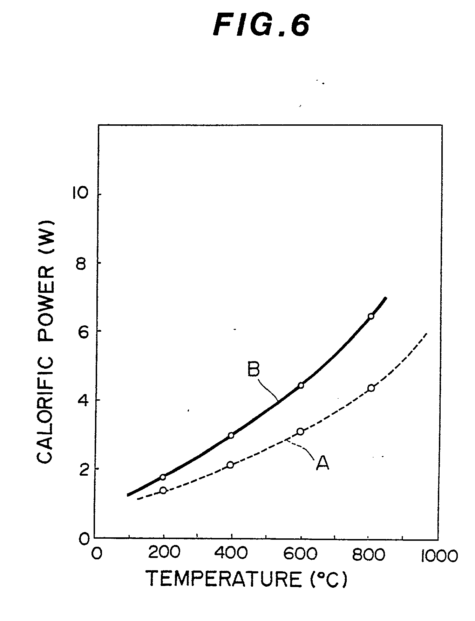

For example, the probe 10 of Fig. 1 is used in the manner as shown in Fig. 5. To measure the partial pressure of oxygen or the magnitude of vacuum in a vacuum chamber 64, the probe 10 is inserted in a hole 69 of a boss 68 formed on a wall 66 of the vacuum chamber 64 such that the open end portion of the probe 10 intrudes into the chamber 64 to expose the oxygen sensing element 20 to the gas atmosphere or vacuum in the chamber 64 through the open end 13 of the tubular case 12. The boss 68 retains an O-ring 70 which is fitted around the case 12 for the purpose of gastight sealing, and a cap nut (not shown) will be fitted around the boss 68. By maintaining the oxygen sensing element 20 at an adequately elevated temperature by utilizing the embedded heater 32 and by maintaining a reference oxygen partial pressure of an appropriate magnitude in the concentration cell part of the element 20 by continuously supplying a DC current of an adequate intensity to the solid electrolyte 36 between the first and second electrodes 34 and 38, it is possible to measure the partial pressure of oxygen in the vacuum chamber 64 with high accuracy over a wide range extending from a nearly atmospheric pressure to a very low pressure that can be regarded as a high level of vacuum. Numerically, this probe 10 is useful for measuring pressures ranging from $10^4$ Pa to $10^{-4}$ Pa.

As the merit of supporting the oxygen sensing element 20 only by lead wires 14, 16, 18, the element 20 can be maintained at a desirably elevated temperature by supplying a relatively small current to the heater 32. An experiment was carried out to examine the amounts of electric power needful for maintaining the oxygen sensing element 20 in the above described probe 10 at various temperatures by keeping the heater 32 energized, and the result is represented by the curve A in Fig. 6. For comparison, the same experiment was carried out on a probe in which the same oxygen sensing element 20 was mounted on an end face of an alumina rod as shown in U.S. Patent No. 4,224, 113, and the result was as represented by the curve B in Fig. 6. As can be seen, the probe of the known construction required a considerably larger amount of calorific power to maintain the oxygen sensing element at a suitable temperature such as about 600°C than the probe according to the invention, because in the former probe it was inevitable that a considerable portion of the heat transferred from the oxygen sensing element to the alumina rod. Furthermore, in the case of the probe of the known construction it is probable that the heated alumina rod liberates some gaseous substances which become a cause of lowering in the accuracy of the measurement of pressure.

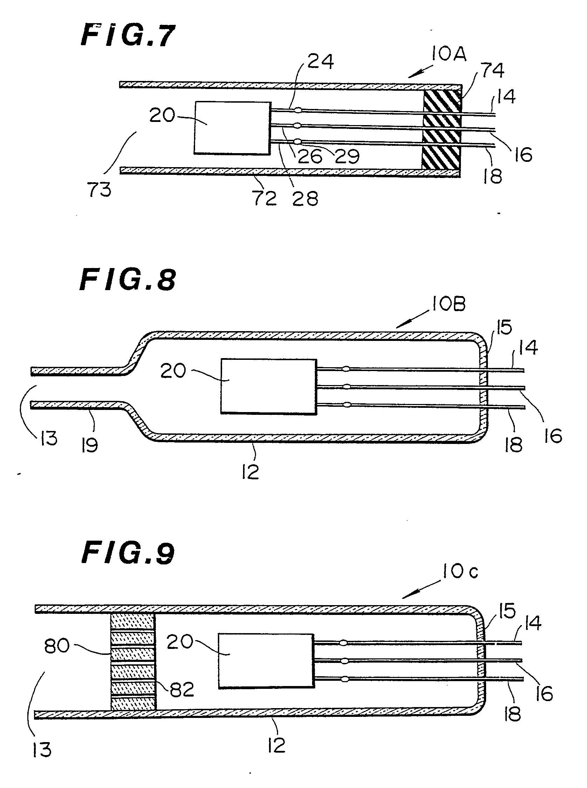

Fig. 7 shows a probe 10A according to the invention, which is similar in principle to the probe 10 of Fig. 1 but is constructed by using a tubular case 72 open at its both ends. One end 73 of the case 72 is left open, but the opposite end is closed with an electrically insulating sealant 74 such as wax, glass sealant or ceramic sealant. The lead wires 14, 16, 18 connected to the oxygen sensing element 20 are inserted in the sealant 74 to pass therethrough.

Fig. 8 shows a preferred modification of the probe 10 of Fig. 1. The modified probe 10B of Fig. 8 differs from the probe 10 of Fig. 1 only in that the tubular case 12 is somewhat extended in its open end portion and constricted in the extended portion to form a narrow neck portion 19 and consequentially decrease the diameter of the open end 13. When this probe 10B is used in the vacuum chamber of a physical vapor deposition apparatus, the existence of the constricted neck portion 19 exhibits the effect of obstructing the deposition of the evaporated substance onto the oxygen sensing element 20 and, hence, preventing deterioration of the performance of the oxygen sensing element 20.

Fig. 9 shows another and also preferred modification of the probe 10 of Fig. 1. The modified probe 10C of Fig. 9 is identical with the probe 10 of Fig. 1 except for the existence of a filter 80 at a location close to the open end 13 of the tubular case 12. This filter 80 has a number of narrow gas passages 82 in order to admit a gas atmosphere subject to measurement into the interior of the case 12 but effectively adsorb the evaporated substance when the probe 10C is used in the vacuum chamber of a physical vapor deposition apparatus. Both the material and the gas-permeable structure of the filter 80 are widely variable. For example, either a honeycomb body of a ceramic material or an adequately compacted mass of glass wool is suitable as this filter 80. Alternatively, it is possible to produce the filter 80 by forming a number of through-holes in a disc of a metal, synthetic resin, rubber, glass or ceramic.

**Claims**

1. A probe for measuring partial pressure of oxygen in a gas atmosphere, comprising
   a tubular case (12; 72) having an open end (13; 73),
   a closure means (15; 74) for gastightly closing the other end of said tubular case,
   an oxygen sensing element (20; 20A; 20B) disposed in said tubular case (12; 72) so as to be entirely spaced from said closure means (15; 74) and the inner surface of said case (12; 72), said oxygen sensing element (20; 20A; 20B) comprising an electric heating means (32) and an oxygen concentration cell which utilizes an oxygen ion conductive solid electrolyte (36; 46; 56) and takes the form of a laminate of thin layers formed on a substrate (30), and a plurality of lead wires (14, 16, 18) which extend from said oxygen sensing element (20; 20A; 20B) and pass through said closure means (15; 74), characterised in that said lead wires (14, 16, 18) are gastightly fixed to said closure means (15; 74) and serve also as the sole mechanical supports for said oxygen sensing element (20; 20A; 20B).

2. A probe according to claim 1, characterised in that said closure means is an end wall (15) of said tubular case (12).

3. A probe according to claim 1, characterised in that said other end of said tubular case (72) is an open end, said closure means being a mass (74) of an insulating sealant.

4. A probe according to claim 1, characterised in that said tubular case (12; 72) is made of a glass.

5. A probe according to claim 1, characterised in that each of said lead wires (14, 16, 18) is a solid rod of a metal.

6. A probe according to claim 5, characterised in that said metal is copper.

7. A probe according to claim 1, characterised in that an end portion (19) contiguous to said open end (13) of said tubular case (12) is constricted so as to become smaller in cross-sectional area than the remaining portion of said case (12).

8. A probe according to claim 1, characterised in that a filter (80) is provided being fitted into said tubular case (12) so as to be located between said open end (13) and said oxygen sensing element (20) and is formed with a number of narrow passages (82) for providing fluid communication therethrough.

9. A probe according to claim 8, characterised in that said filter (80) is a ceramic body having a honeycomb structure.

10. A probe according to claim 8, characterised in that said filter (80) is a compacted mass of glass fiber.

11. A probe according to claim 8, characterised in that said filter (80) is a disc formed with a number of through-holes.

12. A probe according to claim 1, characterised in that said oxygen sensing element (20) comprises a first electrode layer (34) formed on a major surface of said substrate (30), a layer (36) of said solid electrolyte formed on said first electrode layer (34) and a second electrode layer (38) formed on the outer surface of said layer (36) of said solid electrolyte.

13. A probe according to claim 1, characterised in that said oxygen sensing element (20A) comprises a first electrode layer (44) and a second electrode layer (48) formed on a major surface of said substrate (30) so as to be spaced from each other, and a layer (46) of said solid electrolyte formed on said substrate so as to substantially entirely cover said first and second electrode layers (44, 48).

14. A probe according to claim 1, characterised in that said sensing element (20B) comprises a layer (56) of said solid electrolyte formed on a major surface of said substrate (30), a first electrode layer (54) and a second electrode layer (58) formed on the outer surface of the solid electrolyte layer (56) so as to be spaced from each other and a shield layer (60) formed on said first electrode layer (54).

15. A probe according to claim 12, 13 or 14, characterised in that said heating means (32) is embedded in said substrate (30).

**Revendications**

1. Une sonde de mesure de la pression partielle d'oxygène dans une atmosphère de gaz, comprenant

un boîtier tubulaire (12; 72) ayant une extrémité ouverte (13; 73),

un moyen de fermeture (15; 74) pour fermer de manière étanche aux gaz l'autre extrémité dudit boîtier tubulaire,

un élément détectant l'oxygène (20; 20A; 20B) disposé dans ledit boîtier tubulaire (12; 72) afin d'être totalement espacé dudit moyen de fermeture (15; 74) et de la surface interne dudit boîtier (12; 72), ledit élément détectant l'oxygène (20; 20A; 20B) comprenant un moyen chauffant électrique (32) et une cellule de concentration d'oxygène qui utilise un électrolyte solide conducteur de l'ion oxygène (36; 46; 56) et qui a la forme d'un laminage de couches minces formé sur un substrat (30), et un certain nombre de fils conducteurs (14, 16, 18) qui s'étendent dudit élément détectant l'oxygène (20; 20A; 20B) et traversent ledit moyen de fermeture (15; 74), caractérisée en ce que lesdits fils conducteurs (14, 16, 18) sont fixés de manière étanche aux gaz audit moyen de fermeture (15; 74) et servant également de seuls supports mécaniques dudit élément détectant l'oxygène (20; 20A; 20B).

2. Une sonde selon la revendication 1, caractérisée en ce que ledit moyen de fermeture est une paroi extrême (15) dudit boîtier tubulaire (12).

3. Une sonde selon la revendication 1, caractérisée en ce que ladite autre extrémité dudit boîtier tubulaire (72) est une extrémité ouverte, ledit moyen de fermeture étant une masse (74) d'un agent isolant d'étanchéité.

4. Une sonde selon la revendication 1, caractérisée en ce que ledit boîtier tubulaire (12; 72) est fait en verre.

5. Une sonde selon la revendication 1, caractérisée en ce que chacun desdits fils conducteurs (14, 16, 18) est une tige solide d'un métal.

6. Une sonde selon la revendication 5, caractérisée en ce que ledit métal est du cuivre.

7. Une sonde selon la revendication 1, caractérisée en ce qu'une partie extrême (19) contiguë à ladite extrémité ouverte (13) dudit boîtier tubulaire (12) est resserrée afin d'avoir une aire en section transversale plus petite que la partie restante dudit boîtier (12).

8. Une sonde selon la revendication 1, caractérisée en ce qu'un filtre (80) est prévu pour être fixé dans ledit boîtier tubulaire (12) afin d'être placé entre ladite extrémité ouverte (13) et ledit élément détectant l'oxygène (20) et il est formé d'un certain nombre de passages étroits (82) permettant une communication de fluide à travers lui.

9. Une sonde selon la revendication 8, caractérisée en ce que ledit filtre (80) est un corps en céramique ayant une structure de nid d'abeille.

10. Une sonde selon la revendication 8, caractérisée en ce que ledit filtre (80) est une masse tassée de fibre de verre.

11. Une sonde selon la revendication 8, caractérisée en ce que ledit filtre (80) est un disque traversé d'un certain nombre de trous.

12. Une sonde selon la revendication 1, caractérisée en ce que ledit élément détectant l'oxygène (20) comprend une première couche formant électrode (34) formée sur une surface majeure dudit substrat (30), une couche (36) dudit électrolyte solide formée sur ladite première couche formant électrode (34) et une seconde couche formant électrode (38) formée sur la surface externe de ladite couche (36) dudit électrolyte solide.

13. Une sonde selon la revendication 1, caractérisée en ce que ledit élément détectant l'oxygène (20A) comprend une première couche formant électrode (44) et une seconde couche formant électrode (48) formées sur une surface majeure dudit substrat (30) afin d'être espacées l'une de l'autre, et une couche (46) dudit électrolyte solide formée sur ledit substrat afin de couvrir sensiblement totalement lesdites première et seconde couches formant électrodes (44, 48).

14. Une sonde selon la revendication 1, caractérisée en ce que ledit élément de détection (20B) comprend une couche (56) dudit électrolyte solide formée sur une surface majeure dudit substrat (30), une première couche formant électrode (54) et une seconde couche formant électrode (58) formées sur la surface externe de ladite couche d'électrolyte solide (56) afin d'être espacées l'une de l'autre et une couche de blindage (60) formée sur ladite première couche formant électrode (54).

15. Une sonde selon la revendication 12, 13 ou 14, caractérisée en ce que ledit moyen chauffant (32) est noyé dans ledit substrat (30).

## Patentansprüche

1. Sonde zur Messung des Sauerstoffpartialdruckes in einer Gasatmosphäre, mit einem ein offenes Ende (13; 73) aufweisenden, rohrförmigen Gehäuse (12; 72), einer Verschließeinrichtung (15; 74) zum gasdichten Verschließen des anderen Endes des rohrförmigen Gehäuses, einem Sauerstoff-Fühlerelement (20; 20A; 20B), welches in dem rohrförmigen Gehäuse (12; 72) so angeordnet ist, daß es vollständig von der Verschließeinrichtung (15; 74) und der Innenfläche des Gehäuses (12; 72) beabstandet ist, wobei das Sauerstoff-Fühlerelement (20, 20A; 20B) eine elektrische Heizeinrichtung (32) und eine Sauerstoffkonzentrationszelle umfaßt, die einen Sauerstoffionen leitenden, festen Elektrolyten (36; 46; 56) verwendet und die Form einer Schichtanordnung dünner Schichten aufweist, die auf einem Träger (30) gebildet sind, sowie mit einer Vielzahl von Zuführungsdrähten (14, 16, 18), die sich von dem Sauerstoff-Fühlerelement (20; 20A;

20B) erstrecken und durch die Verschließeinrichtung (15; 74) hindurchgehen, dadurch gekennzeichnet, daß die Zuführungsdrähte (14, 16, 18) gasdicht an der Verschließeinrichtung (15; 74) befestigt und auch die einzige, mechanische Stütze für das Sauerstoff-Fühlerelement (20; 20A, 20B) sind.

2. Sonde nach Anspruch 1, dadurch gekennzeichnet, daß die Verschließeinrichtung eine Endwand (15) des rohrförmigen Gehäuses (12) ist.

3. Sonde nach Anspruch 1, dadurch gekennzeichnet, daß das andere Ende des rohrförmigen Gehäuses (72) ein offenes Ende ist und die Verschließeinrichtung eine Anhäufung (74) eines isolierenden Abdichtmittels ist.

4. Sonde nach Anspruch 1, dadurch gekennzeichnet, daß das rohrförmige Gehäuse (12; 72) aus Glas ist.

5. Sonde nach Anspruch 1, dadurch gekennzeichnet, daß jeder der Zuführungsdrähte (14, 16, 18) eine volle Metallstange ist.

6. Sonde nach Anspruch 5, dadurch gekennzeichnet, daß das Metall Kupfer ist.

7. Sonde nach Anspruch 1, dadurch gekennzeichnet, daß der an das offene Ende (13) des rohrförmigen Gehäuses (12) anstoßende Endabschnitt (19) so verengt ist, daß er eine kleinere Querschnittsfläche als der übrige Abschnitt des Gehäuses (12) aufweist.

8. Sonde nach Anspruch 1, dadurch gekennzeichnet, daß ein Filter (80) vorgesehen ist, welches in das rohrförmige Gehäuse (12) so eingepaßt ist, daß es sich zwischen dem offenen Ende (13) und dem Sauerstoff-Fühlerelement (20) befindet, und mit einer Anzahl von engen Durchgängen (82) ausgebildet ist, um eine hindurchgehende Fluidverbindung zu schaffen.

9. Sonde nach Anspruch 8, dadurch gekennzeichnet, daß das Filter (80) ein keramischer Körper mit einer Honigwabenstruktur ist.

10. Sonde nach Anspruch 8, dadurch gekennzeichnet, daß das Filter (80) eine zusammengedrückte Glasfaseranhäufung ist.

11. Sonde nach Anspruch 8, dadurch gekennzeichnet, daß das Filter (80) die Form einer Scheibe mit einer Anzahl von hindurchgehenden Öffnungen aufweist.

12. Sonde nach Anspruch 1, dadurch gekennzeichnet, daß das Sauerstoff-Fühlerelement (20) eine erste Elektrodenschicht (34), die auf einer Hauptfläche des Trägers (30) ausgebildet ist, eine Schicht (36) aus einem festen Elektrolyten, die auf der ersten Elektrodenschicht (34) ausgebildet ist, und eine zweite Elektrodenschicht (38) umfaßt, die auf der äußeren Oberfläche der Schicht (36) aus dem festen Elektrolyten gebildet ist.

13. Sonde nach Anspruch 1, dadurch gekennzeichnet, daß das Sauerstoff-Fühlerelement (20A) eine erste Elektrodenschicht (44) und eine zweite Elektrodenschicht (48), die auf einer Hauptoberfläche des Trägers (30) derart gebildet sind, daß sie voneinander beabstandet sind, und eine Schicht (46) aus dem festen Elektrolyten aufweist, die auf dem Träger so gebildet ist, daß sie im wesentlichen vollständig die erste und zweite Elektrodenschicht (44, 48) überdeckt.

14. Sonde nach Anspruch 1, dadurch gekennzeichnet, daß das Fühlerelement (20B) eine Schicht (56) aus dem festen Elektrolyten, die auf eine Hauptoberfläche des Substrats (30) gebildet ist, eine erste Elektrodenschicht (54) und eine zweite Elektrodenschicht (58), die auf der äußeren Oberfläche der festen Elektrolytschicht (56) so gebildet sind, daß sie voneinander beabstandet sind, und eine Abschirmschicht (60) aufweist, welche auf der ersten Elektrodenschicht (54) gebildet ist.

15. Sonde nach einem der Ansprüche 12, 13 oder 14, dadurch gekennzeichnet, daß die Heizeinrichtung (32) in dem Träger (30) eingebettet ist.

# FIG.1

# FIG.5

*FIG.2*

*FIG.3*

*FIG.4*

# FIG.6

# FIG.7

# FIG.8

# FIG.9